# EUROPÄISCHE PATENTSCHRIFT

(11) **EP 4 545 313 B1**
(45) Veröffentlichungstag und Bekanntmachung des Hinweises auf die Patenterteilung: **29.07.2026**
(21) Anmeldenummer: 24202210.1
(22) Anmeldetag: 24.09.2024
(51) Int. Cl.: B60C 11/01, B60C 11/03, B60C 11/13

(54) **FAHRZEUGREIFEN**
VEHICLE TYRE
BANDAGE PNEUMATIQUE POUR VÉHICULES

(30) Priorität: 27.10.2023 DE 102023210691
(43) Veröffentlichungstag der Anmeldung: 30.04.2025
(73) Patentinhaber: Continental Reifen Deutschland GmbH, 30175 Hannover (DE)
(72) Erfinder: Sudikatis, Florian, 30175 Hannover (DE)
(74) Vertreter: Continental Corporation

(56) Entgegenhaltungen:
- EP-A1- 3 369 589
- US-A1- 2019 225 024

## Beschreibung

Die Erfindung betrifft einen Fahrzeugreifen, bevorzugt für ein Leichtfahrzeug, besonders bevorzugt für ein Motorrad und/oder ein Fahrrad und/oder einen Rollstuhl, mit einem profilierten Laufstreifen, Seitenwänden und Wulstbereichen, wobei der Laufstreifen einen zentralen in Umfangsrichtung umlaufenden Laufstreifenabschnitt, welcher auf festem bzw. befestigtem Untergrund die mit dem Untergrund in Kontakt kommende Positivflächen zur Verfügung stellt, und an Schulterrundungen bis zu den Seitenwänden reichende schulterseitige Abschnitte aufweist, welche mit Blöcken oder blockartigen Profilpositiven profiliert und mit den Schulterrundungen folgenden Deckflächen versehen sind, wobei auf den Deckflächen der Blöcke oder blockartigen Profilpositive der schulterseitigen Abschnitte des Laufstreifens jeweils zumindest eine, in Draufsicht und in Umfangsrichtung der Seitenwände betrachtet, langgestreckte Erhebung ausgebildet ist.

Ein derartiger Fahrzeugreifen, welcher ein Motorradreifen ist, ist beispielsweise aus der EP 3 369 589 A1 bekannt. Dieser Motorradreifen weist einen laufrichtungsgebunden gestalteten Laufstreifen mit einem zentralen Laufstreifenabschnitt, bis zu den Seitenwänden reichenden, schulterseitigen Abschnitten, schmalen Umfangsrillen und innerhalb des Laufstreifens beidseitig geschlossen endenden, jeweils eine oder zwei der Umfangsrillen kreuzenden Schrägrillen auf. Die Umfangsrillen weisen eine Breite und eine Tiefe von 0,1 mm bis 2,0 mm auf. Zu den Schrägrillen gehören solche, welche den schulterseitigen Abschnitten des Laufstreifens gemeinsam mit einer der Umfangsrillen blockartige Profilpositive verleihen. Entlang der Umfangsrillen können die Rillenkanten der Umfangsrillen mitbildende, schmale stegförmige, in Umfangsrichtung langgestreckte, beispielsweise balkenförmige Erhebungen ausgebildet sein, welche sich jeweils bis zu den entsprechenden, die jeweilige Umfangsrille kreuzenden Schrägrillen erstrecken. Es können somit Erhebungen auf den Deckflächen der blockartigen Profilpositiven der schulterseitigen Abschnitte vorhanden sein. Diese Erhebungen sorgen beim Abrollen des Motorradreifens für eine lokale Erhöhung des Bodenkontaktdrucks, wodurch die Griffeigenschaften verbessert sein sollen.

Die US 2019/0225024 A1 offenbart einen Motorradreifen mit einem Laufstreifen mit bis zu den Seitenwänden reichenden, schulterseitigen Abschnitten, welche durch Querrillen in Blöcke strukturiert sind. Auf jedem Block ist randseitig entlang der jeweiligen Seitenwand eine in Umfangsrichtung der Seitenwand langgestreckte, balkenförmige Erhebung ausgebildet, welche an ihrer Oberseite durch eine im Querschnitt gerade verlaufende Fläche mit einer in axialer Richtung ermittelten Breite von 1 mm bis 2 mm begrenzt ist. Die Erhebungen sollen beim Fahren unter deutlicher Neigung des Motorradreifens relativ zur Fahrbahn die Fahrstabilität verbessern.

Laufstreifen von derartigen Fahrzeugreifen, insbesondere von Fahrradreifen, die für den urbanen Einsatz, als Trekking-Reifen, Cargo-Reifen, Rennreifen oder Reifen der Kategorie Gravel, letztere mit einem hohen Anteil an Einsatz auf Straßen, vorgesehen sind, weisen im zentralen Laufstreifenabschnitt, welcher jener Abschnitt ist, mit welchem der Fahrradreifen auf befestigtem, beispielsweise asphaltiertem Untergrund, in Kontakt kommt, eine Profilierung mit einem hohen Positivanteil auf. Derartige Laufstreifen werden üblicherweise auch als geschlossen profiliert bezeichnet. Reifen der eingangs genannten Art sind beispielsweise die auf der Webseite der Firma Continental abgebildete Reifen CONTACT Plus City, siehe https://www.continental-reifen.de/b2c/bicycle/tires/contact-plus-city.html (abgerufen am 20.9.2023) und RIDE Tour, siehe https://www.continental-reifen.de/b2c/bicycle/tires/ride-tour.html (abgerufen am 20.9.2023).

Insbesondere bei derartigen Fahrradreifen ist der Laufstreifen schulterseitig zu den Seitenwänden hin "abgesenkt", weist daher Außenschulterabschnitte auf, welche unerwünschte Steifigkeitssprünge zu den Seitenwänden verursachen und den Footprint, insbesondere bei Kurvenfahrt, verkleinern. Diese Außenschulterbereiche sind beispielsweise mit Profilblöcken oder blockartigen Profilstrukturen profiliert, die mit Einschnitten versehen sind, oder sind überhaupt mit Einschnitten profiliert. In den Einschnitten verfangen sich leicht Steine, etwa bei Kurvenfahrt auf entsprechendem Untergrund, zusätzlich eindringende weitere Steine können ein Zusetzen der Einschnitte bewirken. Ein vollständiges Zusetzen der Einschnitte kann auch beim Fahren auf matschigem Untergrund erfolgen. Bei einer entsprechenden Querbelastung neigen die Einschnitte ferner dazu, sich zu schließen, sodass ihre Kanten für einen etwaigen Griff auf unbefestigtem losem Untergrund nicht zur Verfügung stehen.

Eine weitgehend glatte, wenig profilierte Lauffläche im zentralen Laufstreifenabschnitt ermöglicht zwar eine höhere Antriebskraft, vor allem auf trockenen und nur leicht feuchten, insbesondere befestigten Untergründen, macht es aber schwierig, die bereits erwähnten Steifigkeitssprünge zu den Seitenwänden effektiv zu reduzieren und den Nachteil eines reduzierten Footprints bei Kurvenfahrt zu vermeiden.

Der Erfindung liegt die Aufgabe zugrunde, bei Fahrzeugreifen der eingangs genannten Art die Steifigkeitssprünge zwischen dem Laufstreifen und den Seitenwänden auf besonders effektive Weise zu reduzieren.

Gelöst wird die gestellte Aufgabe erfindungsgemäß dadurch, dass die Erhebungen eine gegenüber der Deckfläche des Blocks oder des blockartigen Profilpositivs in vertikaler Richtung ermittelte Höhe von 0,50 mm bis 4,00 mm aufweisen, wobei die Erhebungen an ihrer Basis an der Deckfläche des Blocks oder blockartigen Profilpositivs zu jeder Seitenkante der Deckfläche jeweils einen Abstand von mindestens 0,50 mm aufweisen, sodass die Erhebungen, in Draufsicht betrachtet, von der Deckfläche komplett umlaufen sind.

Die Erhebungen bilden Körper, die es gestatten, eine Verteilung und Reduktion des Laufstreifenvolumens in Richtung zu den Seitenwänden auf besonders ausgewogene Weise zu ermöglichen und dadurch Steifigkeitssprünge zwischen dem Laufstreifen und den Seitenwänden besonders gut zu vermeiden. Zusätzlich stellen die Erhebungen Griffkanten beim Fahren auf nachgiebigen Untergründen zur Verfügung, wobei auf Einschnitte verzichtet werden kann.

Bei einer bevorzugten Ausführung sind auf den Deckflächen der Blöcke oder blockartigen Profilpositive der schulterseitigen Abschnitte des Laufstreifens jeweils zwei oder drei der in Draufsicht und, in Umfangsrichtung der Seitenwände betrachtet, langgestreckte, insbesondere parallel zueinander verlaufende Erhebungen ausgebildet. Zwei oder drei Erhebungen gestatten es auf besonders effektive Weise, das Laufstreifenvolumen in den Außenschulterbereichen zur Vermeidung bzw. Reduktion von Steifigkeitssprüngen zwischen dem Laufstreifen und den Seitenwänden zu verteilen. Zusätzlich erhöhen mehrere Erhebungen die Anzahl von bei Kurvenfahrt oder auf losem bzw. weichem Untergrund zur Verfügung stehenden Griffkanten.

Von besonderem Vorteil ist es dabei, wenn die Höhe der Erhebungen 1,00 mm bis 3,00 mm beträgt und wenn bevorzugt die Erhebungen jeweils eine konstante Höhe und insbesondere bei mehr als einer Erhebung pro Block oder blockartigem Profilpositiv auch übereinstimmende Höhen aufweisen.

Zur Verringerung der erwähnten Steifigkeitssprünge ist die Maßnahme vorteilhaft, bei mehr als einer Erhebung pro Block oder blockartigem Profilpositiv die Höhe der Erhebungen umso geringer zu wählen, je näher sie zur Seitenwand positioniert sind.

Wie bereits erwähnt wirken die Kanten der Erhebungen als zusätzliche Griffkanten bei Kurvenfahrt oder auf losem bzw. weichem oder matschigem Untergrund. In diesem Zusammenhang ist es bevorzugt, wenn bei mehr als einer Erhebung pro Block oder blockartigem Profilpositiv die Erhebungen an ihrer Basis an der Deckfläche des Blocks oder blockartigen Profilpositivs einen gegenseitigen Abstand von 0,50 mm bis 2,00 mm besitzen.

Ein besonders ausgewogenes Volumen der Erhebungen lässt sich mit solchen Erhebungen erzielen, die in Draufsicht und in Umfangsrichtung der Seitenwände betrachtet langgestreckt parallelogrammförmig sind. Die Erhebungen lassen sich vorteilhafterweise auch in Draufsicht und in Umfangsrichtung der Seitenwand betrachtet langgestreckt dreieckig ausführen, wenn zwei oder drei Erhebungen pro Block oder blockartigem Profilpositiv vorgesehen sind, weisen die Spitzen der Dreiecke von in Richtung Seitenwand aufeinanderfolgenden Erhebungen vorzugsweise jeweils in entgegengesetzte Umfangsrichtungen.

Bei einer weiteren bevorzugten Ausgestaltung weisen die Erhebungen in ihrer Längserstreckung zumindest eine Kante mit einer Länge von 5,00 mm bis 20,00 mm, insbesondere von 8,00 mm bis 15,00 mm, und insbesondere senkrecht zu ihrer längsten Kante an ihrer Deckfläche ermittelt, eine größte Breite von 1,50 mm bis 6,00 mm, insbesondere von 2,00 mm bis 4,50 mm, auf.

Bei Fahrzeugreifen mit einer laufrichtungsgebunden gestalteten Profilierung im Laufstreifen sind vorteilhafterweise die Erhebungen in ihrer Längserstreckung von zumindest einer Kante begrenzt, die mit der Umfangsrichtung des Laufstreifens bzw. der Seitenwand einen Winkel von 5° bis 15° einschließt, wobei der Reifen derart am Fahrzeug zu montieren ist, dass in Abrollrichtung bei Vorwärtsfahrt die weiter laufstreifeninnenseitig befindlichen Enden dieser Kanten zuerst in den Untergrund eintreten.

Eine vorteilhafte Ausführungsform ist dadurch gegeben, dass der Fahrzeugreifen ein Fahrzeugluftreifen ist.

Eine vorteilhafte Ausführungsform ist dadurch gegeben, dass der Fahrzeugreifen ein Fahrzeugreifen für ein Leichtfahrzeug, bevorzugt für ein Fahrrad und/oder Motorrad und/oder einen Rollstuhl, besonders bevorzugt für ein Fahrrad, ist.

Es kann sich entsprechend um einen Leichtfahrzeugreifen, bevorzugt um einen Fahrradreifen und/oder um einen Motorradreifen und/oder um einen Rollstuhlreifen, besonders bevorzugt um einen Fahrradreifen, handeln.

Der Begriff "Leichtfahrzeug" bezeichnet im Sinne der Anmeldung Fahrzeuge mit einer Leermasse von maximal 425 kg (ohne Batterien bei Elektrofahrzeugen), bevorzugt Fahrräder und/oder Rollstühle und/oder Motorräder und/oder Fahrzeuge der Fahrzeugklasse L im Sinne der EU Verordnung 168/2013, welche jeweils die Erfordernisse der Leermasse von maximal 425 kg erfüllen.

Das Leichtfahrzeug, bevorzugt Fahrrad, kann rein mit Muskelkraft angetrieben sein und somit keinen Antriebsmotor aufweisen. Das Leichtfahrzeug, bevorzugt Fahrrad, kann aber auch einen Antriebsmotor, bevorzugt einen Elektromotor, zum Antrieb des Leichtfahrzeuges aufweisen. Der bevorzugt elektrische Antriebsmotor kann dabei als Hilfsmotor zur Trittunterstützung oder als alleiniger Antrieb ausgelegt sein. Das Leichtfahrzeug, bevorzugt Fahrrad, kann als Lastenfahrzeug ausgelegt sein. Das Leichtfahrzeug, bevorzugt Fahrrad, kann zwei, drei, vier oder mehr Räder aufweisen.

Kraftfahrzeuge der Fahrzeugklasse L im Sinne der der EU Verordnung 168/2013 umfassen insbesondere Fahrzeuge gemäß den Klassen L1e und/oder L2e und/oder L3e und/oder L4e und/oder L5e und/oder L6e.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 einen in die Ebene projizierten Umfangsabschnitt eines profilierten Laufstreifens eines Fahrradreifens,
Fig. 2 eine Draufsicht auf den Umfangsabschnitt des Fahrradreifens und
Fig. 3 eine Seitenansicht des Umfangsabschnittes des Fahrradreifens.

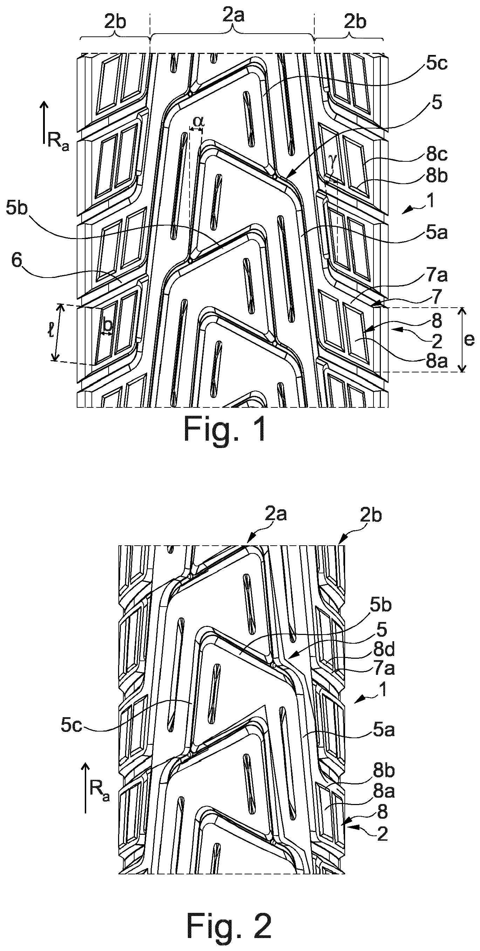

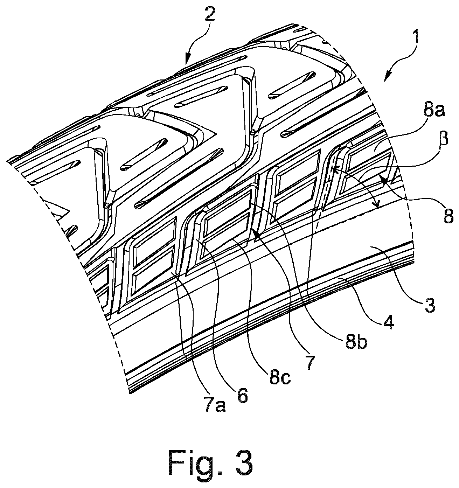

Fig. 1 und Fig. 2 zeigen von einem als Luftreifen ausgeführten Fahrradreifen 1 einen Umfangsabschnitt des profilierten Laufstreifens 2, Fig. 3 zusätzlich eine der beiden Seitenwände 3 und einen der beiden Wulstbereiche 4. Die weiteren, üblicherweise im Inneren des Fahrradreifens vorgesehenen Bestandteile, wie etwa eine mit einer Festigkeitsträgerlage versehene Karkasse, sind nicht dargestellt.

Der Fahrradreifen 1 weist eine "geschlossene" Profilierung auf, das heißt eine Profilierung mit einem vergleichsweise hohen Positivanteil in einem zentralen in Umfangsrichtung umlaufenden Laufstreifenabschnitt 2a auf, welcher bei Fahrt auf befestigtem Untergrund, beispielsweise asphaltierten Straßen, mit diesem in Kontakt kommt. Derartige Laufstreifenprofilierungen sind insbesondere für Fahrradreifen für den urbanen Einsatz, ferner für Fahrradreifen der Kategorien Cargo, Trekking, Race oder Gravel, letztere, wenn diese zu einem größeren Teil auf asphaltierten Straßen gefahren werden, vorgesehen. Der Laufstreifen 2 ist mit schulterseitigen profilierten Abschnitten 2b zu den Seitenwänden 3 hin weit abgesenkt und derart gestaltet, dass Steifigkeitssprünge zwischen den Seitenwänden 3 und dem Laufstreifen 2 zumindest reduziert sind. Die schulterseitigen profilierten Abschnitte 2b kommen üblicherweise nur auf unbefestigtem Untergrund und/oder bei Kurvenfahrt mit dem Untergrund in Kontakt.

Beim gezeigten Ausführungsbeispiel weist der zentrale Laufstreifenabschnitt 2a Hauptrillen 5 auf, welche sich jeweils aus drei Abschnitten zusammensetzen, einem schulterseitigen, langen Umfangsabschnitt 5a, einem schräg in Richtung zweiter Schulter verlaufendem Diagonalabschnitt 5b und einem kurzen Umfangsabschnitt 5c. Die Umfangsabschnitte 5a, 5c verlaufen unter spitzen Winkeln α von 5° bis 15° und zueinander gegensinnig geneigt relativ zur Umfangsrichtung. In Umfangsrichtung folgen Hauptrillen 5 aufeinander, deren längerer Umfangsabschnitt 5a abwechselnd bei der einen und bei der anderen Reifenschulter liegt und deren Diagonalabschnitte 5b zueinander gegensinnig geneigt sind, wobei die kurzen Umfangsabschnitte 5c jeweils in den Diagonalabschnitt 5b der in Umfangsrichtung benachbarten Hauptrille 5 einmünden. Die in Umfangsrichtung aufeinanderfolgenden Hauptrillen 5 sind derart gestaltet, dass ihre langen Umfangsabschnitte 5a in axialer Richtung betrachtet einander abschnittsweise überlappen, wodurch im zentralen Laufstreifenabschnitt 2a randseitig schmale, sich in Umfangsrichtung erstreckende Profilpositive vorhanden sind. Die Ausgestaltung des zentralen Laufstreifenabschnitts 2a ist nicht Gegenstand der Erfindung, sodass auf sie ansonsten nicht näher eingegangen wird.

Die profilierten Abschnitte 2b des Laufstreifens 2 an den Reifenschultern sind bei der gezeigten Ausführung in in Umfangsrichtung aufeinanderfolgende blockartige Profilpositive 7 gegliedert. Die blockartigen Profilpositive 7 sind in Umfangsrichtung durch Querrillen 6 voneinander getrennt, die bei seitlicher Sicht auf den Fahrradreifen (Fig. 3) jeweils gleichinnig zu den Diagonalabschnitten 5c geneigt sind, unter einem Winkel β von 60° bis 85° zur Umfangsrichtung der Seitenwand 3 verlaufen und in die Umfangsabschnitte 5a der Hauptrillen 5 einmünden. Die blockartigen Profilpositive 7 weisen laufstreifenaußenseitig und in Umfangsrichtung eine Erstreckungslänge e (Fig. 1) von 16,00 mm bis 25,00 mm auf. Die Hauptrillen 5 und die Querrillen 6 weisen die vorgesehene Profiltiefe des Laufstreifens 2 auf, welche 1,00 mm bis 3,00 mm beträgt.

Die profilblockartigen Profilpositive 7 weisen außenseitig Deckflächen 7a auf, die den Schulterrundungen der Reifenschultern folgen und auf welchen beim gezeigten Ausführungsbeispiel jeweils zwei parallel zueinander verlaufende Erhebungen 8 ausgebildet sind. Die Erhebungen 8 sind in Draufsicht und in Umfangsrichtung der Seitenwände 3 langgestreckt parallelogrammförmig mit zwei stumpfen und zwei spitzen Winkeln gestaltet und weisen Deckflächen 8a mit zwei kürzeren zueinander parallel verlaufenden Kanten 8b und zwei längeren parallel zueinander verlaufenden Kanten 8c auf. Bei alternativen Ausführungen sind die Erhebungen 8 in Draufsicht als langgestreckte Rechtecke oder als langgestreckte Dreiecke, mit ihren Dreieckspitzen in entgegensetzte Umfangsrichtungen weisend, ausgestaltet.

An ihrer Basis an der Deckfläche 7a weisen die Erhebungen 8 zu den Seitenkanten der Deckfläche 7a einen Abstand von mindestens 0,5 mm auf. Ihr gegenseitigen Abstand, ermittelt an der Deckfläche 7a der blockartigen Profilpositive 7, beträgt 0,50 mm bis 2,00 mm.

Die Erhebungen 8 weisen, senkrecht zu ihren Deckflächen 7a ermittelt, eine insbesondere konstante Höhe von 0,50 mm bis 4,00 mm, insbesondere von 1,00 mm bis 3,00 mm, auf, wobei beide Erhebungen 8 bevorzugt die gleiche Höhe besitzen. Bei einer alternativen Ausführung weist die zur Seitenwand 3 näher befindliche Erhebung 8 jeweils eine um 30% bis 70% geringere Höhe auf als die andere Erhebung 8. Bei der gezeigten bevorzugten Ausführung verlaufen die längeren Kanten 8c der Deckflächen 8a gegenüber der Umfangsrichtung jeweils unter einem spitzen Winkel γ (Fig. 1) von 5° bis 15° geneigt und insbesondere parallel zu den Umgangsabschnitten 5a der Hauptrillen 5. Die längeren Kanten 8c an der Deckfläche 8a der Erhebungen 8 weisen eine Länge I (Fig. 1) von 5,00 mm bis 20,00 mm, insbesondere von 8,00 mm bis 15,00 mm, auf. Ihre im rechten Winkel zu den längeren Kanten 8c ermittelte Breite b bzw. ihre größte Breite beträgt 1,50 mm und bis zu 6,00 mm, insbesondere 2,00 mm bis 4,50 mm. Die Erhebungen 8 weisen zwischen ihren Deckflächen 8a und den Deckflächen 7a der blockartigen Profilpositive 7 Seitenflanken 8d (Fig. 2) auf, die in Richtung zu den Deckflächen 7a abfallen oder senkrecht zu diesen verlaufen.

Die beim gezeigten Ausführungsbeispiel vorhandene Neigung der Hauptrillenabschnitte 5a, 5b, 5c, der Querrillen 6 und der Kanten 8c an den Deckflächen 8a der Erhebungen 8 relativ zur Umfangsrichtung bedingt einen laufrichtungsgebundenen Laufstreifen, wobei der Fahrradreifen derart am Rad zu montieren ist, dass in Abrollrichtung Rₐ bei Vorwärtsfahrt die weiter laufstreifeninnenseitig befindlichen Enden der Hauptrillenabschnitte 5a, 5b,5c, der Querrillen 6 und der Kanten 8c zuerst in den Untergrund eintreten.

Bei alternativen Ausführungen ist jeweils eine Erhebung oder es sind drei Erhebungen auf den Deckflächen der blockartigen Profilpositive 7 ausgebildet.

Die Erfindung ist nicht auf die beispielhaft ausgeführten Fahrzeugreifen beschränkt. Erfindungsgemäß ausgeführte Reifen können Fahrzeugluftreifen, bevorzugt Leichtfahrzeugreifen, besonders bevorzugt Motorradreifen und/oder Fahrradreifen und/oder Rollstuhlreifen, sein.

### Bezugszeichenliste

- 1: Fahrradreifen
- 2: Laufstreifen
- 2a: zentraler Laufstreifenabschnitt
- 2b: schulterseitiger Abschnitt
- 3: Seitenwand
- 4: Wulstbereich
- 5: Hauptrille
- 5a, 5c: Umfangsabschnitt
- 5b: Diagonalabschnitt
- 6: Querrille
- 7: blockartiges Profilpositiv
- 7a: Deckfläche
- 8: Erhebung
- 8a: Deckfläche
- 8b: kürzere Kante
- 8c: längere Kante
- 8d: Seitenflanke
- e: Erstreckungslänge
- l: Länge
- b: Breite
- α: Winkel (5° bis 15°)
- β: Winkel (60° bis 85°)
- γ: Winkel (5° bis 15°)
- Rₐ: Abrollrichtung

## Patentansprüche

1. Fahrzeugreifen, bevorzugt für ein Leichtfahrzeug, besonders bevorzugt für ein Motorrad und/oder ein Fahrrad und/oder einen Rollstuhl, mit einem profilierten Laufstreifen (2), Seitenwänden (3) und Wulstbereichen (4), wobei der Laufstreifen (2) einen zentralen in Umfangsrichtung umlaufenden Laufstreifenabschnitt (2a), welcher auf festem bzw. befestigtem Untergrund die mit dem Untergrund in Kontakt kommende Positivflächen zur Verfügung stellt, und an Schulterrundungen bis zu den Seitenwänden (3) reichende schulterseitige Abschnitte (2b) aufweist, welche mit Blöcken oder blockartigen Profilpositiven (7) profiliert und mit den Schulterrundungen folgenden Deckflächen (7a) versehen sind, wobei auf den Deckflächen (7a) der Blöcke oder blockartigen Profilpositive (7) der schulterseitigen Abschnitte (2b) des Laufstreifens (2) jeweils zumindest eine, in Draufsicht und in Umfangsrichtung der Seitenwände (3) betrachtet, langgestreckte Erhebung (8) ausgebildet ist,
**dadurch gekennzeichnet,**
**dass** die Erhebungen (8) eine gegenüber der Deckfläche (7a) des Blocks oder des blockartigen Profilpositivs (7) in vertikaler Richtung ermittelte Höhe von 0,50 mm bis 4,00 mm aufweisen, wobei die Erhebungen (8) an ihrer Basis an der Deckfläche (7a) des Blocks oder blockartigen Profilpositivs (7) zu jeder Seitenkante der Deckfläche (7a) jeweils einen Abstand von mindestens 0,50 mm aufweisen, sodass die Erhebungen (8), in Draufsicht betrachtet, von der Deckfläche (7a) komplett umlaufen sind.

2. Fahrzeugreifen nach Anspruch 1, **dadurch gekennzeichnet, dass** auf den Deckflächen (7a) der Blöcke oder blockartigen Profilpositive (7) der schulterseitigen Abschnitte (2b) des Laufstreifens (2) jeweils zwei oder drei der in Draufsicht und, in Umfangsrichtung der Seitenwände (3) betrachtet, langgestreckte, insbesondere parallel zueinander verlaufende Erhebungen (8) ausgebildet sind.

3. Fahrzeugreifen nach Anspruch 1 oder 2, **dadurch gekennzeichnet, dass** die Höhe der Erhebungen (8) 1,00 mm bis 3,00 mm beträgt.

4. Fahrzeugreifen nach einem der Ansprüche 1 bis 3, **dadurch gekennzeichnet, dass** die Erhebungen (8) jeweils eine konstante Höhe aufweisen.

5. Fahrzeugreifen nach einem der Ansprüche 1 bis 4, **dadurch gekennzeichnet, dass** bei mehr als einer Erhebung (8) pro Block oder blockartigem Profilpositiv (7) diese Erhebungen (8) übereinstimmende Höhen aufweisen.

6. Fahrzeugreifen nach einem der Ansprüche 1 bis 4, **dadurch gekennzeichnet, dass** bei mehr als einer Erhebung (8) pro Block oder blockartigem Profilpositiv (7) die Höhe der Erhebungen (8) umso geringer ist, je näher sie zur Seitenwand (3) positioniert sind.

7. Fahrzeugreifen nach einem der Ansprüche 1 bis 6, **dadurch gekennzeichnet, dass** bei mehr als einer Erhebung (8) pro Block oder blockartigem Profilpositiv (7) diese Erhebungen (8) an ihrer Basis an der Deckfläche (7a) des Blocks oder blockartigen Profilpositivs (7) einen gegenseitigen Abstand von 0,50 mm bis 2,00 mm aufweisen.

8. Fahrzeugreifen nach einem der Ansprüche 1 bis 7, **dadurch gekennzeichnet, dass** Erhebungen (8) in Draufsicht und in Umfangsrichtung der Seitenwände (3) betrachtet langgestreckt parallelogrammförmig sind.

9. Fahrzeugreifen nach einem der Ansprüche 1 bis 7, **dadurch gekennzeichnet, dass** Erhebungen in Draufsicht und in Umfangsrichtung der Seitenwände (3) betrachtet langgestreckt dreieckig sind.

10. Fahrzeugreifen nach einem der Ansprüche 1 bis 9, **dadurch gekennzeichnet, dass** Erhebungen (8) in ihrer Längserstreckung zumindest eine Kante (8c) mit einer Länge (I) von 5,00 mm bis 20,00 mm, insbesondere von 8,00 mm bis 15,00 mm, aufweisen.

11. Fahrzeugreifen nach einem der Ansprüche 1 bis 10, **dadurch gekennzeichnet, dass** die Erhebungen (8), senkrecht zu ihrer längsten Kante (8c) an ihrer Deckfläche (8a) ermittelt, eine größte Breite (b) von 1,50 mm bis 6,00 mm, insbesondere von 2,00 mm bis 4,50 mm, aufweisen.

12. Fahrzeugreifen mit einer laufrichtungsgebunden gestalteten Profilierung im Laufstreifen (2), nach einem der Ansprüche 1 bis 12, **dadurch gekennzeichnet, dass** die Erhebungen (8) in ihrer Längserstreckung von zumindest einer Kante (8c) begrenzt sind, die mit der Umfangsrichtung des Laufstreifens bzw. der Seitenwand einen Winkel (γ) von 5° bis 15° einschließt, wobei der Fahrzeugreifen derart am Fahrzeug zu montieren ist, dass in Abrollrichtung (Rₐ) bei Vorwärtsfahrt die weiter laufstreifeninnenseitig befindlichen Enden dieser Kanten (8c) zuerst in den Untergrund eintreten.

13. Fahrzeugreifen nach einem der Ansprüche 1 bis 12, **dadurch gekennzeichnet, dass** es sich um einen Fahrradreifen handelt.

## Claims

1. Vehicle tyre, preferably for a light vehicle, particularly preferably for a motorcycle and/or a bicycle and/or a wheelchair, with a profiled tread (2), sidewalls (3) and bead regions (4), the tread (2) having a central circumferentially running tread portion (2a), which provides the positive areas that come into contact with the ground on a solid or paved surface, and shoulder-side portions (2b), which reach up to the sidewalls (3) at shoulder roundings and which are profiled with blocks or block-like profile positives (7) and are provided with top areas (7a) following the shoulder roundings, wherein on the top areas (7a) of the blocks or block-like profile positives (7) of the shoulder-side portions (2b) of the tread (2) there is in each case at least one elongated elevation (8), when considered in plan view and in the circumferential direction of the sidewalls (3),
**characterized**
**in that** the elevations (8) have a height determined in the vertical direction with respect to the top area (7a) of the block or the block-like profile positive (7) of 0.50 mm to 4.00 mm, wherein the elevations (8) have at their base on the top area (7a) of the block or block-like profile positive (7) a distance from each side edge of the top area (7a) respectively of at least 0.50 mm, so that, when considered in plan view, the elevations (8) are surrounded all around by the top area (7a).

2. Vehicle tyre according to Claim 1, **characterized in that** formed on the top areas (7a) of the blocks or block-like profile positives (7) of the shoulder-side portions (2b) of the tread (2) there are in each case two or three of the elongated and in particular mutually parallel elevations (8), when considered in plan view and in the circumferential direction of the sidewalls (3).

3. Vehicle tyre according to Claim 1 or 2, **characterized in that** the height of the elevations (8) is 1.00 mm to 3.00 mm.

4. Vehicle tyre according to one of Claims 1 to 3, **characterized in that** the elevations (8) are each of a constant height.

5. Vehicle tyre according to one of Claims 1 to 4, **characterized in that**, when there is more than one elevation (8) per block or block-like profile positive (7), these elevations (8) are of the same heights.

6. Vehicle tyre according to one of Claims 1 to 4, **characterized in that**, when there is more than one elevation (8) per block or block-like profile positive (7), the height of the elevations (8) is all the smaller the closer they are positioned to the sidewall (3).

7. Vehicle tyre according to one of Claims 1 6, **characterized in that**, when there is more than one elevation (8) per block or block-like profile positive (7), these elevations (8) have at their base on the top area (7a) of the block or block-like profile positive (7) a distance from one another of 0.50 mm to 2.00 mm.

8. Vehicle tyre according to one of Claims 1 to 7, **characterized in that**, when considered in plan view and in the circumferential direction of the sidewalls (3), the elevations (8) are elongated-rhomboidal.

9. Vehicle tyre according to one of Claims 1 to 7, **characterized in that**, when considered in plan view and in the circumferential direction of the sidewalls (3), the elevations are elongated-triangular.

10. Vehicle tyre according to one of Claims 1 to 9, **characterized in that** the elevations (8) have in their longitudinal extent at least one edge (8c) with a length (I) of 5.00 mm to 20.00 mm, in particular of 8.00 mm to 15.00 mm.

11. Vehicle tyre according to one of Claims 1 to 10, **characterized in that** the elevations (8) have, determined perpendicularly to their longest edge (8c) on their top area (8a), a greatest width (b) of 1.50 mm to 6.00 mm, in particular of 2.00 mm to 4.50 mm.

12. Vehicle tyre with a directional profiling in the tread (2), according to one of Claims 1 to 12, **characterized in that** the elevations (8) are delimited in their longitudinal extent by at least one edge (8c), which forms an angle (γ) of 5° to 15° with the circumferential direction of the tread or of the sidewall, wherein the vehicle tyre is to be fitted on the vehicle in such a way that, in the rolling direction (Rₐ), the ends of these edges (8c) that are further inside the tread are first to arrive at ground level during forward travel.

13. Vehicle tyre according to one of Claims 1 to 12, **characterized in that** it is a bicycle tyre.

## Revendications

1. Pneu de véhicule, de manière préférée pour un véhicule léger, de manière particulièrement préférée pour une motocyclette et/ou une bicyclette et/ou un fauteuil roulant, avec une bande de roulement (2) profilée, des flancs (3) et des zones de talon (4), la bande de roulement (2) comportant une section centrale (2a) de bande de roulement périphérique dans la direction périphérique, laquelle met à disposition les sculptures en relief entrant en contact avec le sol sur un sol ferme ou fixe, et des sections côté épaulement (2b) parvenant jusqu'aux flancs (3) sur des arrondis d'épaulement, lesquelles sont profilées avec des blocs ou des sculptures en relief (7) de type bloc et sont pourvues des surfaces de recouvrement (7a) suivant les arrondis d'épaulement, au moins une partie surélevée (8) allongée, vue en plan et dans la direction périphérique des flancs (3) étant formée sur les surfaces de recouvrement (7a) des blocs ou des sculptures en relief (7) de type bloc des sections côté épaulement (2b) de la bande de roulement (2),
**caractérisé en ce**
**que** les parties surélevées (8) comportent une hauteur de 0,50 mm à 4,00 mm déterminée dans la direction verticale par rapport à la surface de recouvrement (7a) du bloc ou de la sculpture en relief (7) de type bloc, les parties surélevées (8) présentant sur leur base sur la surface de recouvrement (7a) du bloc ou de la sculpture en relief (7) de type bloc par rapport à chaque bord latéral de la surface de recouvrement (7a) chacune une distance d'au moins 0,50 mm si bien que les parties surélevées (8) sont, vues en plan, totalement entourées par la surface de recouvrement (7a).

2. Pneu de véhicule selon la revendication 1, **caractérisé en ce que** respectivement deux ou trois des parties surélevées (8) allongées, en particulier s'étendant parallèlement les unes aux autres vues en plan, et vues dans la direction périphérique des flancs (3) sont formées sur les surfaces de recouvrement (7a) des blocs ou des sculptures en relief (7) de type bloc des sections côté épaulement (2b) de la bande de roulement (2).

3. Pneu de véhicule selon la revendication 1 ou 2, **caractérisé en ce que** la hauteur des parties surélevées (8) va de 1,00 mm à 3,00 mm.

4. Pneu de véhicule selon l'une des revendications 1 à 3, **caractérisé en ce que** les parties surélevées (8) présentent chacune une hauteur constante.

5. Pneu de véhicule selon l'une des revendications 1 à 4, **caractérisé en ce que** dans le cas de plus d'une partie surélevée (8) par bloc ou sculpture en relief (7) de type bloc, lesdites parties surélevées (8) présentent des hauteurs correspondantes.

6. Pneu de véhicule selon l'une des revendications 1 à 4, **caractérisé en ce que** dans le cas de plus d'une partie surélevée (8) par bloc ou sculpture en relief (7) de type bloc, la hauteur des parties surélevées (8) est d'autant plus faible qu'elles sont positionnées davantage à proximité par rapport au flanc (3).

7. Pneu de véhicule selon l'une des revendications 1 à 6, **caractérisé en ce que**, dans le cas de plus d'une partie surélevée (8) par bloc ou sculpture en relief (7) de type bloc, lesdites parties surélevées (8) présentent sur leur base sur la surface de recouvrement (7a) du bloc ou de la sculpture en relief (7) de type bloc une distance mutuelle de 0,50 mm à 2,00 mm.

8. Pneu de véhicule selon l'une des revendications 1 à 7, **caractérisé en ce que** des parties surélevées (8) sont, vues en plan et dans la direction périphérique des flancs (3), en forme de parallélogramme allongé.

9. Pneu de véhicule selon l'une des revendications 1 à 7, **caractérisé en ce que** des parties surélevées sont, vues en plan et dans la direction périphérique des flancs (3), sont en forme de triangle allongé.

10. Pneu de véhicule selon l'une des revendications 1 à 9, **caractérisé en ce que** des parties surélevées (8) présentent dans leur extension longitudinale au moins un bord (8c) avec une longueur (I) de 5,00 mm à 20,00 mm, en particulier de 8,00 mm à 15,00 mm.

11. Pneu de véhicule selon l'une des revendications 1 à 10, **caractérisé en ce que** les parties surélevées (8) présentent une largeur maximale (b) de 1,50 mm à 6,00 mm, en particulier de 2,00 mm à 4,50 mm, déterminée perpendiculairement à leur bord le plus long (8c) sur leur surface de recouvrement (8a).

12. Pneu de véhicule avec un profilage dans la bande de roulement (2) associé au sens de marche selon l'une des revendications 1 à 12, **caractérisé en ce que** l'extension longitudinale des parties surélevées (8) est limitée par au moins un bord (8c), qui forme un angle (γ) de 5° à 15° avec la direction périphérique de la bande de roulement ou du flanc, le pneu du véhicule devant être monté sur le véhicule de telle manière que les extrémités desdits bords (8c) de trouvant davantage côté intérieur de la bande de roulement rentrent d'abord dans le sol dans la direction de roulement (Rₐ) en marche avant.

13. Pneu de véhicule selon l'une des revendications 1 à 12, **caractérisé en ce qu'**il s'agit d'un pneu de bicyclette.
